(19)

Europäisches
Patentamt
European
Patent Office
Office européen
des brevets

(11) **EP 2 253 833 A1**

(12) **EUROPEAN PATENT APPLICATION**
published in accordance with Art. 153(4) EPC

(43) Date of publication:
**24.11.2010 Bulletin 2010/47**

(21) Application number: **09722412.5**

(22) Date of filing: **06.01.2009**

(51) Int Cl.:
*F02P 17/12* (2006.01)     *F02D 45/00* (2006.01)
*G01M 15/11* (2006.01)

(86) International application number:
**PCT/JP2009/050015**

(87) International publication number:
**WO 2009/116303 (24.09.2009 Gazette 2009/39)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **17.03.2008 JP 2008068442**

(71) Applicants:
• **Daihatsu Motor Co., Ltd.**
  **Ikeda-shi, Osaka 563-8651 (JP)**
• **Diamond Electric MFG. Co., Ltd.**
  **Osaka-shi**
  **Osaka 532-0026 (JP)**

(72) Inventors:
• **ASANO, Morito**
  **Ikeda-shi**
  **Osaka 563-8651 (JP)**

• **FUKUMURA, Yoshiyuki**
  **Osaka-shi**
  **Osaka 532-0026 (JP)**
• **MORISHITA, Shinji**
  **Osaka-shi**
  **Osaka 532-0026 (JP)**
• **YAMASHITA, Tetsuo**
  **Osaka-shi**
  **Osaka 532-0026 (JP)**
• **IZUMI, Mitsuhiro**
  **Osaka-shi**
  **Osaka 532-0026 (JP)**

(74) Representative: **TBK-Patent**
  **Bavariaring 4-6**
  **80336 München (DE)**

(54) **METHOD FOR JUDGING COMBUSTION STATE OF INTERNAL COMBUSTION**

(57)     A current generated on a secondary side of an
ignition coil caused by an LC resonance between the
secondary side of the ignition coil and a spark plug at an
end of discharge of the spark plug is detected. A com-
bustion state is determined based on a shape of the
waveform caused by the LC resonance of the detected
current.

Fig.3

EP 2 253 833 A1

**Description**

TECHNICAL FIELD

The present invention relates to a method for determining a combustion state of an internal combustion engine having its spark plug connected to an ion current detection circuit, in which a current generated at the end of discharge of the spark plug is used.

BACKGROUND ART

Conventionally and frequently, generated is an ion current for each ignition in a combustion chamber of an internal combustion engine, the generated ion current is detected, then determined is the combustion state based on the waveform of the ion current. In such a determination of the combustion state a current generated at a secondary coil of an ignition coil which is caused to an LC resonance between the secondary coil and a power supply capacitor of an ion current detection circuit at the end of discharge of the spark plug, is overlapped on an ion current detected in a discharge time period at which for carrying out discharge from a spark plug a signal is outputted and then the discharge is finished. Therefore, this current caused by the LC resonance is waited to fully attenuate, before detection of the ion current is started (for example, see Patent Document 1).

Patent Document 1: Japanese Patent Laid-open Publication No. H7-286552

DISCLOSURE OF THE INVENTION

PROBLEMS TO BE SOLVED BY THE INVENTION

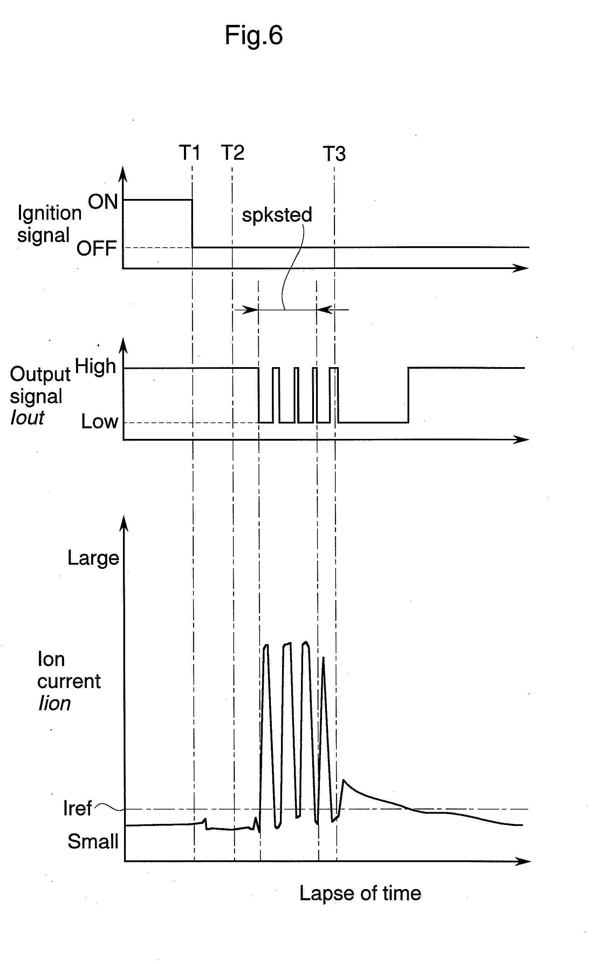

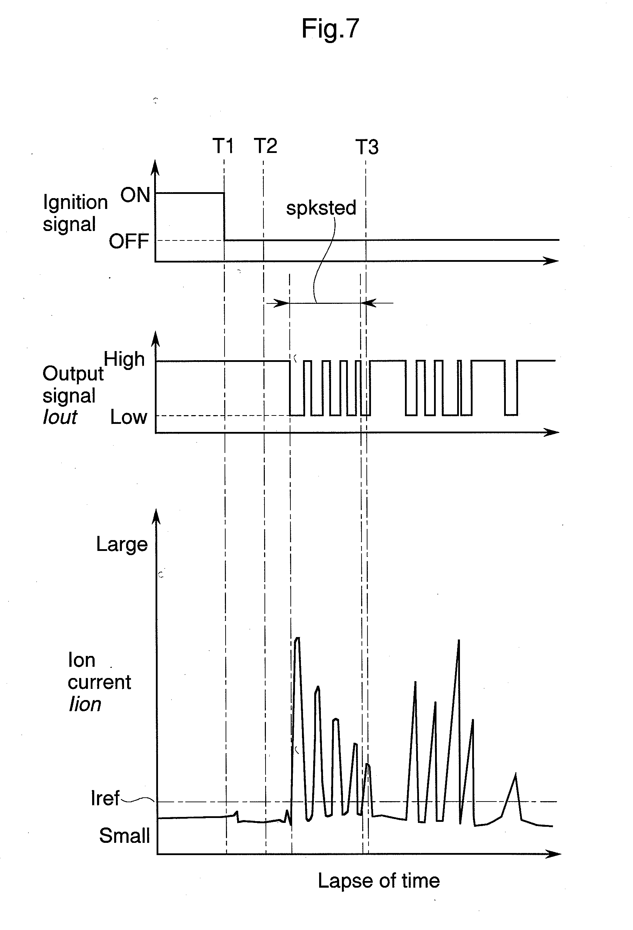

Meanwhile, the timing of starting detection of the ion current is set to a time point which is empirically determined as a time point at which it can be determined that the current caused by the LC resonance fully attenuates in a combustion. However, in some cases, a phenomenon referred to as noise leakage occurs in the event of misfire, which is a phenomenon in which a current is gradually generated at the ion current detection circuit, the current being caused by discharge of electric charges remained at the electrode of the spark plug. As illustrated in Fig. 6, this current may be detected after starting detection of the ion current. Here, conventionally, the combustion state is determined based on an ion current detected in a period from a time point where it becomes possible to determine that the current caused by the LC resonance fully attenuates in the combustion, i.e., the period from time point T3 in Fig. 6. On the other hand, there is a problem that, when the magnitude of the current at the occurrence of noise leakage becomes greater than a prescribed threshold value, it may mistakenly be determined that it is in the combustion state. Further, in the event of misfire, as illustrated in Fig. 7, corona noise may be generated after the end of discharge of the spark plug. Thus, in accordance with the conventional manner, when the combustion state is determined based on the ion current detected in a period from the time point where it becomes possible to determine that the current caused by the LC resonance fully attenuates in the combustion, i.e., the period from time point T3 in Fig. 7, there is another problem that, when the magnitude of the corona noise becomes greater than a prescribed threshold value, it is mistakenly determined that it is in the combustion state. On the other hand, in order to improve the combustion state, it is desirable to employ a coil with a great output for the spark plug. However, when the combustion state determination method as described in the foregoing is adopted, the period in which the current caused by the LC resonance fully attenuates after the end of discharge becomes long. In other words, start of detecting the ion current is delayed, and hence the time zone in which the ion current can be detected is shortened. Here, when the combustion progresses fast, the ion current associated with the combustion disappears before the current caused by the LC resonance fully attenuates after the end of discharge. As a result, there is still another problem that the ion current is not detected, and the misfire state is mistakenly determined despite the normal combustion being actually attained.
The present invention has been made to solve the problems described in the foregoing.

MEANS FOR SOLVING THE PROBLEMS

Specifically, the present invention is directed to a method for determining a combustion state of an internal combustion engine having its sparkplug connected to an ion current detection circuit, the method including: detecting a current generated on a secondary side of an ignition coil caused by an LC resonance between the secondary side of the ignition coil and the spark plug at an end of discharge of the spark plug, and determining a combustion state based on a shape of a waveform caused by the LC resonance of the detected current.
With such a structure, centering attention on the fact that the waveform shape of the detected current in the combustion differs from that in the event of misfire, e. g. , like that the current having a waveform caused by the LC resonance has a long duration time in the event of misfire, the misfire determination is carried out based on the waveform shape. Therefore, it becomes possible to prevent the problem of mistaken determination due to occurrence of noise leakage or corona noise that there is no misfire when actually is. Further, because the current immediately after the end of discharge is detected, the ion current can be detected even when the combustion ends early. Accordingly, it becomes possible to prevent also the problem of mistaken determination when the combustion progresses fast that it is the misfire state despite normal combustion being actually attained. It is noted that, the "LC resonance between the secondary side of the ignition coil and the spark plug" is a concept that includes an LC resonance between the secondary side of the ignition coil and a capacitor of the ion current detection circuit connected to the spark plug.

One possible mode that can particularly effectively prevent the problems may be as follows: a misfire state is determined when a duration time of the waveform caused by the LC resonance of the detected current is greater than a prescribed value. This is because, with such a structure, the duration time of the aforementioned current is long in the misfire state, as described above.

The following mode can also particularly effectively prevent the problems by the same reason: when a ratio of an elapsed time from resonance detection end, which is from the end of the duration time of the waveform caused by the LC resonance of the detected current until the measurement end point, a misfire state is determined when the duration time of the waveform caused by the LC resonance is smaller than a prescribed value.

In the internal combustion engine in which a waveform forming circuit that outputs a signal current when a current output from the ion current detection circuit is smaller than a prescribed current value is connected to the ion current detection circuit, a suitable method of measuring the duration time of the waveform caused by the LC resonance may be to measure a length of a period from a fall of the signal current detected first to a fall of the signal current detected last as the duration time of the waveform caused by the LC resonance.

Another possible mode that can particularly effectively prevent the problems may be as follows: when an integral value of the detected current is smaller than a prescribed value, it is determined that the engine is in a misfire state. This is based on the following reason: with such a structure, in a case where the ion current detection circuit is used, the ion current is superimposed on the current caused by the LC resonance in the combustion, whereas the ion current is not superimposed on the current caused by the LC resonance in the event of misfire, and the intensity of the detected current becomes weak.

Still another possible mode that can particularly effectively prevent the problems may be as follows: when a frequency of the waveform caused by the LC resonance of the detected current is equal to or higher than a prescribed value, or a misfire state is determined when frequency components of the waveform caused by the LC resonance of the detected current substantially entirely fall within a prescribed range.

This is based on the following reason: with such a structure, in a case where the ion current detection circuit is used, in the combustion, the detected current as a result of superimposition of the ion current on the current caused by the LC resonance gently changes, and the frequency of the waveform becomes low and a plurality of types of frequency components are included; whereas in the event of misfire, the ion current is not superimposed on the current caused by the LC resonance, and the frequency components of the detected current substantially entirely fall within a prescribed range, and the current oscillates at high frequencies as compared to the case in which the ion current is superimposed.

Yet another possible mode that can particularly effectively prevent the problems may be as follows: a misfire state is determined when a peak value of the detected current is attenuated. This is based on the following reason: in the event of misfire, the LC resonance current is mainly detected, and the LC resonance current often attenuates while oscillating in a prescribed cycle; whereas in the combustion state, the peak value of the detected current is often greater than the first peak value of the LC resonance current because the LC resonance current is superimposed on the ion current $Iion$.

ADVANTAGES OF THE INVENTION

According to the method for determining the combustion state according to the present invention, centering attention on the fact that the waveform shape of the detected current in the event of misfire differs from that when combustion is attained, e. g. , in the former case, the current having a waveform caused by the LC resonance has a long duration time, the misfire determination is carried out based on the waveform shape. Therefore, it becomes possible to prevent the problem of mistaken determination due to occurrence of an elongated current caused by the LC resonance or corona noise that there is no misfire when actually is. Further, because the current immediately after the end of discharge is detected, the ion current can be detected even when the combustion ends early. Accordingly, it becomes possible to prevent also the problem of mistaken determination when the combustion progresses fast that it is the misfire state despite normal combustion being actually attained.

BRIEF DESCRIPTION OF THE DRAWINGS

Fig. 1 is a schematic diagram illustrating an engine according to an embodiment of the present invention.
Fig. 2 is a schematic diagram illustrating an ignition circuit and an ion current detection circuit according to an embodiment of the present invention.
Fig. 3 is a flowchart illustrating a control flow in a combustion time measurement program according to the embodiment.
Fig. 4 is a diagram for explaining action according to the embodiment.
Fig. 5 is a diagram for explaining action according to the embodiment.
Fig. 6 is a diagram for explaining action according to the embodiment.
Fig. 7 is a diagram for explaining action according to the embodiment.
Fig. 8 is a flowchart illustrating a control flow in a combustion time measurement program according to another mode of the present invention.
Fig. 9 is a flowchart illustrating a control flow in a combustion time measurement program according to another mode of the present invention.
Fig. 10 is a flowchart illustrating a control flow in a combustion time measurement program according to another mode of the present invention.

DESCRIPTION OF REFERENCE NUMERALS

100···engine
6·····control unit
18····spark plug

BEST MODES FOR CARRYING OUT THE INVENTION

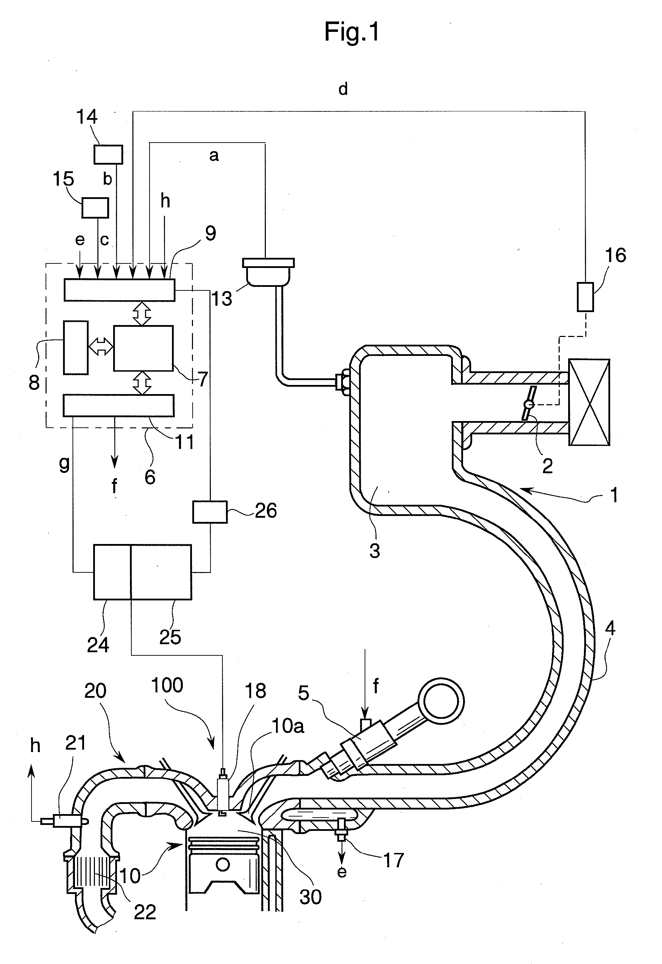

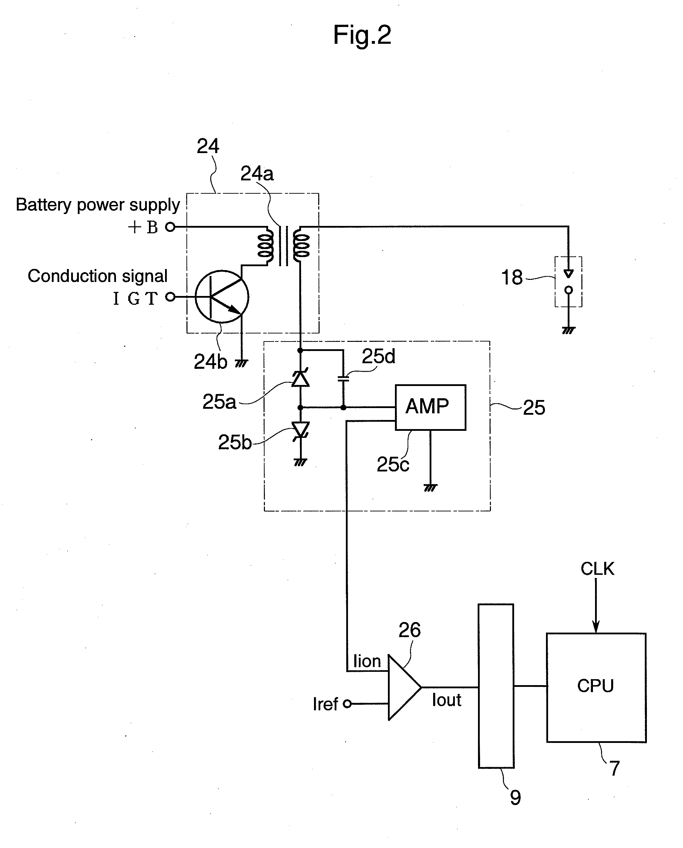

An embodiment of the present invention will be described below with reference to the drawings.
Schematically illustrated in Fig. 1, an engine 100 being an internal combustion engine is a four-cylinder engine for an automobile. To an intake system 1 of the engine 100, a throttle valve 2 that opens and closes in response to a accelerator pedal (not illustrated) is provided, and a surge tank 3 is disposed on the downstream side of the throttle valve 2. An intake manifold 4 of the intake system 1 communicating with the surge tank 3 has its one end communicated with a cylinder 10 through an intake valve 10a, and near the one end, a fuel injection valve 5 is further provided. The fuel injection valve 5 is controlled by an electronic control unit 6 such that injection is carried out independently of each cylinder. In an exhaust system 20, an $O_2$ sensor 21 being an air/fuel ratio sensor for measuring the oxygen concentration in the exhaust gas is installed at a position upstream of a three-way catalyst 22 disposed in the pipe line leading to a not-illustrated muffler. The $O_2$ sensor 21 has a structure similarly to that of the one well known as a common $O_2$ sensor. Specifically, it is structured to be capable of generating a voltage based on a difference in oxygen concentration between an atmospheric air side electrode and an exhaust gas side electrode, so as to determine, based on the voltage, whether the air/fuel ratio is rich or lean relative to the stoichiometric air/fuel ratio.
The electronic control unit 6 is structured mainly with a microcomputer system including a central processing unit 7, a memory device 8, an input interface 9, and an output interface 11. The input interface 9 receives an intake air pressure signal a from an intake air pressure sensor 13 for detecting a pressure in the surge tank 3, an engine speed signal *b* from an engine speed sensor 14 for detecting an engine speed NE, a vehicle speed signal c from a vehicle speed sensor 15 for detecting a vehicle speed, an LL signal *d* from an idling switch 16 for detecting an open/closed state of the throttle valve 2, a coolant temperature signal e from a coolant temperature sensor 17 for detecting an engine coolant temperature, and a current signal h from the aforementioned $O_2$ sensor 21, and the like. On the other hand, the output interface 11 outputs a fuel injection signal *f* to the fuel injection valve 5, and outputs an ignition pulse *g* to a spark plug 18. To the spark plug 18, an ion current measuring circuit 25 is connected for detecting an ion current *Iion.* As illustrated in Fig. 2, the spark plug 18 is connected to an ignition circuit 24 including at least an ignition coil 24a and a switching transistor 24b. Accordingly, the ion current detection circuit 25 is also connected to the ignition circuit 24. As illustrated in Fig. 2, the ion current detection circuit 25 includes Zener diodes 25a and 25b connected in series and reversely to each other, a capacitor 25d connected in parallel to the Zener diode 25a, and charged by counter-electromotive force generated at the ignition coil 24a to generate a voltage for use in detection, and an amplifier 25c that amplifies and outputs the ion current *Iion.* From the amplifier 25c of the ion current detection circuit 25, the ion current *Iion* is output to a comparator 26, which is a waveform forming circuit. The comparator 26 carries out forming waveform to the ion current *Iion* which is an analog signal generated by application of a voltage, and outputs it in a square wave (pulse) form. Specifically, as illustrated in Fig. 2, the comparator 26 compares a prescribed current value *Iref* of an intensity corresponding to a preset threshold value of the ion current *Iion* with the ion current *Iion*, and the comparator 26 outputs an output signal *Iout* when the ion current *Iion* is smaller than the prescribed current value *Iref*. Specifically, the output signal *Iout* becomes a square wave that falls (becomes low) at a time point where the ion current *Iion* becomes greater than the prescribed current value *Iref*, and that rises (becomes high) at a time point where the ion current *Iion* becomes smaller than the prescribed current value *Iref*. The comparator 26 has its output terminal connected to the central processing unit 7 through the input interface 9.

Installed in the electronic control unit 6 is a program that: uses the intake air pressure signal *a* output from the intake air pressure sensor 13 and the engine speed signal *b* output from the engine speed sensor 14 as main information; corrects a basic injection time with various correction coefficients determined by the engine condition, to thereby determine a fuel injection valve open time, i.e., an injector final conduction time *T;* and controls the fuel injection valve 5 with the determined conduction time, so as to cause the fuel injection valve 5 to inject fuel corresponding to the engine load to the intake system 1.

In addition, further installed in the electronic control unit 6 is a combustion state determination program that: detects the ion current *Iion* that includes a current generated on the secondary side of the ignition coil 24a caused by the LC resonance between the ignition coil 24a and the capacitor 25d of the ion current detection circuit 25 at the end of discharge of the spark plug 18 (hereinafter referred to as the LC resonance current); and determines the combustion state based on the shape of waveform of the detected current. Specifically, this combustion state determination program successively detects the time points of falls and rises of the signal current *Iout* during a discharge time zone that starts from a measurement start point *T2* and ends at a prescribed measurement end point *T3,* the measurement start point T2 being a time point after a lapse of a prescribed time from a fall time point *T1* of an ignition signal, the prescribed time being a time required for noises generated in accordance with the end of ignition to fully attenuate; measures a duration period of the waveform caused by the LC resonance of the detected current, i.e., a period from a fall of the signal current *Iout* detected first to a fall of the signal current *Iout* detected last as a duration time of the waveform caused by the LC resonance current (hereinafter referred to as the LC resonance current duration time *spksted*)*;* and determines that it is in the misfire state when the duration time *spksted* is equal to or greater than a prescribed value *Ts.* It is noted that, the length of the period from the time point *T1* to the measurement start point *T2,* i.e., the length of the prescribed period required for the noises generated in accordance with the end of ignition to fully attenuate is set to a prescribed value previously obtained empirically. Further, the length of the period from the measurement start point *T2* to the measurement end point *T3,* i.e., the length of the discharge time zone, is empirically determined as a length of a period from the measurement start point to a time point at which it becomes possible to determine that the current caused by the LC resonance fully attenuates when the engine 100 is not in the combustion state.

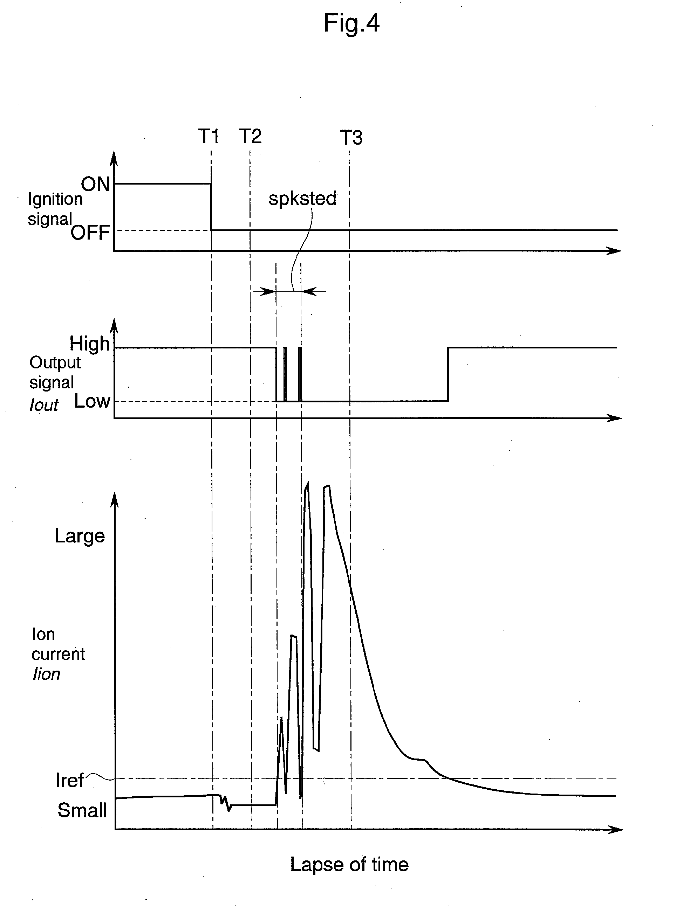

Here, in such a structure, as illustrated in Figs. 4 to 7 each illustrating temporal variations of the ion current *Iion,* the signal current *Iout,* and the ignition signal with respect to the common time axis, a bias voltage is applied to the spark plug 18 for each ignition; the LC resonance current is generated after the end of discharge; and the ion current *Iion* is generated in the combustion chamber 30 in the combustion. Here, the magnitude *i* of the LC resonance current is represented by the following formula:

$$i = [-2CV/C(4L/C-R^2)^{1/2}]e^{-Lt/2R}\sin((4L/C-R^2)^{1/2}t)$$

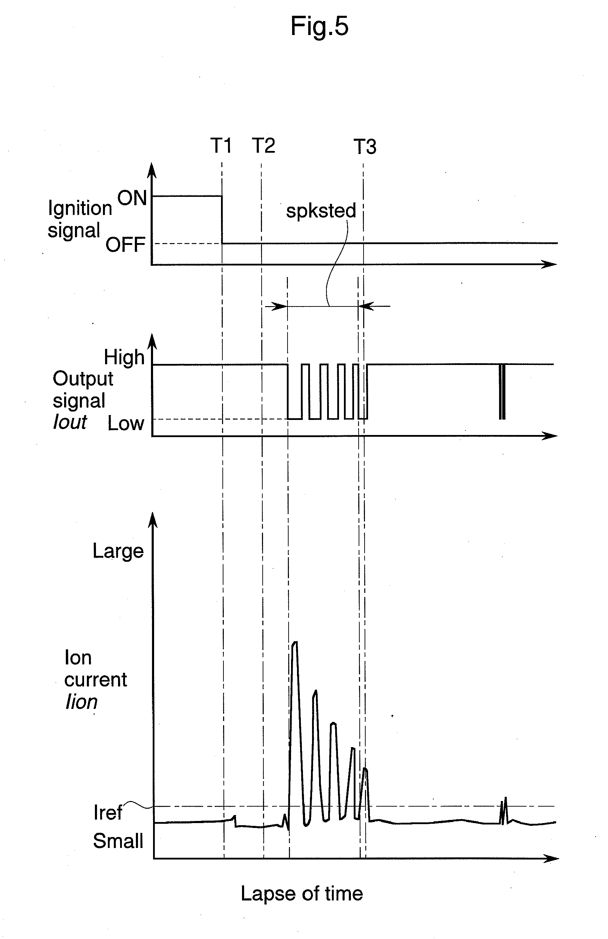

where C is a capacitance of the capacitor 25d, *L* is an inductance on the secondary side of the ignition coil 24a, *V* is a blow-off voltage of the capacitor 25d at the end of discharge, and *R* is a resistance component associated with generation of ion between the opposite electrodes of the spark plug 18 in accordance with combustion of an air-fuel mixture. It is noted that Fig. 4 illustrates a state in the combustion, Fig. 5 illustrates a case where substantially only the LC resonance current is generated in the event of misfire, Fig. 6 illustrates a case where noise leakage occurs in addition to the LC resonance current after discharge, and Fig. 7 illustrates a case in which spike noise is generated in addition to the LC resonance current.

That is, in the combustion, because the resistance component *R* is present between the opposite electrodes of the spark plug 18, the LC resonance current attenuates fast, i.e., its duration time becomes short. On the other hand, in the event of misfire, because the resistance component *R* is not present between the opposite electrodes of the spark plug 18, the LC resonance current attenuates slowly, i.e., the duration time of the LC resonance current becomes long.

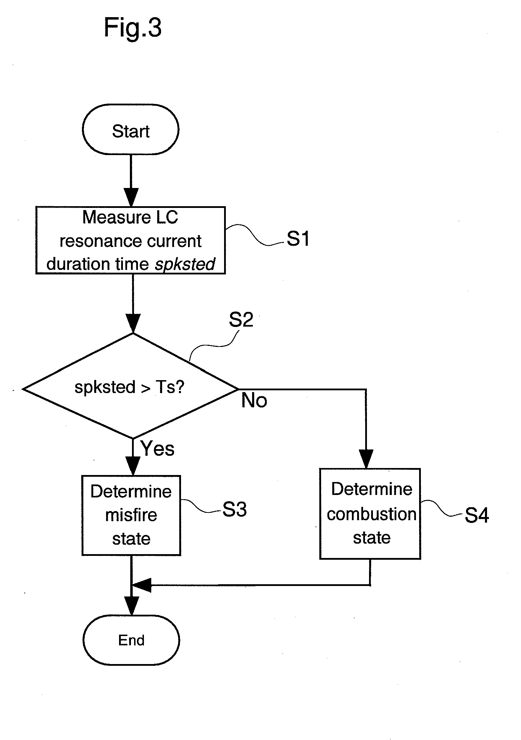

Referring to the flowchart of Fig. 3, the schematic procedure of the processes carried out by the combustion state determination program will be described.

First, in step S1, the LC resonance current duration time *spksted* is measured. Then, the process proceeds to step S2. Specifically, a period from a fall of the signal current *Iout* detected first to a fall of the signal current *Iout* detected last is measured.

In step S2, whether or not the LC resonance current duration time *spksted* is greater than the prescribed value *Ts* is determined. When the LC resonance current duration time *spksted* is greater than the prescribed value Ts, the process proceeds to step S3. Otherwise, the process proceeds to step S4.

In step S3, it is determined that the engine 100 is in themisfire state, and the combustion state determination program ends.

In step S4, it is determined that the engine 100 is in the combustion state, and the combustion state determination program ends.

Here, in the combustion state, as illustrated in Fig. 4, the LC resonance current duration time *spksted* is shorter than the LC resonance current duration time *spksted* in the misfire state as illustrated in Figs. 5 to 7, and in step S2, it is determined that the LC resonance current duration time *spksted* is not greater than the prescribed value *Ts.* That is, the processes of steps S1 → S2 → S4 are successively carried out, and it is determined that the engine 100 is in the combustion state. On the other hand, in the misfire state, the LC resonance current duration time *spksted* is long, and it is determined that, in step S2, the LC resonance current duration time *spksted* is greater than the prescribed value *Ts.* That is, the processes of steps S1 → S2 → S3 are successively carried out, and it is determined that the engine 100 is in the misfire state.

Thus, according to the combustion state determination method according to the present embodiment, centering attention on the fact that the LC resonance current duration time *spksted* becomes long in the event of misfire, it is determined that the engine 100 is in the misfire state when the duration time *spksted* is greater than the prescribed value Ts; otherwise, it is determined that the engine 100 is in the combustion state. This determination is carried out irrespective of the ion current after the measurement end point T3, which is used in the conventional combustion state determination using an ion current. Therefore, even when the noise leakage as illustrated in Fig. 6 occurs in the misfire state, or when the corona noise as illustrated in Fig. 7 occurs in the misfire state, it can correctly be determined that it is in the misfire state. Accordingly, it becomes possible to prevent the problem that arises in the conventional manner in which detection of the ion current *Iion* is started at a measurement start time point after a lapse of time required for the LC resonance current to fully attenuate from the end of ignition in the combustion, i.e., at the measurement end point *T3* in the present embodiment, that is, the problem of mistaken determination due to occurrence of noise leakage or corona noise that there is no misfire when actually is. Additionally, because the ion current *Iion* after the end of discharge when combustion is attained until a lapse of time required for the LC resonance current to fully attenuate is detected, the ion current *Iion* associated with combustion can be detected even when the combustion ends early. Accordingly, it becomes also possible to prevent the problem of mistaken determination when the combustion is fast that it is the misfire state despite normal combustion being actually attained.

It is noted that the present invention is not limited to the embodiment described above.

For example, in the embodiment described above, the time from when a fall of the signal current *Iout,* i.e., a rise of the ion current *Iion,* is detected first, until when a fall of the signal current *Iout,* i.e., a rise of the ion current *Iion,* is detected last, is measured as the LC resonance current duration time *spksted,* and this duration time *spksted* is used to determine the combustion state of the engine. On the other hand, it is also possible to adopt a mode in which: the time from when a fall of the signal current *Iout,* i.e. , a rise of the ion current *Iion,* is detected last, until the measurement end point *T3,* is measured as an elapsed time from resonance detection end *spksted2,* which is from the end of detecting the LC resonance current until the measurement end point T3; and when the elapsed time from resonance detection end *spksted2* is equal to or greater than a prescribed value, it is determined that it is the combustion state. Further, it is also possible to adopt a mode in which: based on a ratio *Rs* of the elapsed time from resonance detection end *spksted2* to the LC resonance current duration time *spksted,* when the ratio *Rs* is equal to or greater than a prescribed value, it is determined that it is the combustion state. Still further, any two items out of the LC resonance current duration time *spksted,* the elapsed time from resonance detection end *spksted2,* and the ratio *Rs* may be used in combination to carry out determination of the combustion state. Additionally, start of measurement of the duration time may not be the time point when a fall of the ion current *Iion* is detected first, but instead, it may be the measurement start point *T2.*

It is even more preferable to determine it is in the misfire state when the ion current *Iion* is not detected. This is based on the following reason: in the event of misfire, a discharge period, i.e., from the end of ignition until generation of the LC resonance current, is long, and there are some, cases where the LC resonance current is generated at the measurement end point *T3* or later.

Further, yet another possible mode may be to determine it is the misfire state when the frequency of the detected current is equal to or higher than a prescribed value, instead of measuring the LC resonance current duration time *spksted.* One possible exemplary mode of carrying out determination of the misfire state based on the frequency as described above may be to count the number of falls of the signal current Iout, i.e., the number of times that the ion current *Iion* becomes greater than the prescribed threshold value *Iref,* and to determine it is the misfire state when the number of times that the ion current *Iion* becomes greater than the prescribed threshold value *Iref,* i.e., the number of interrupt is greater than the prescribed value.

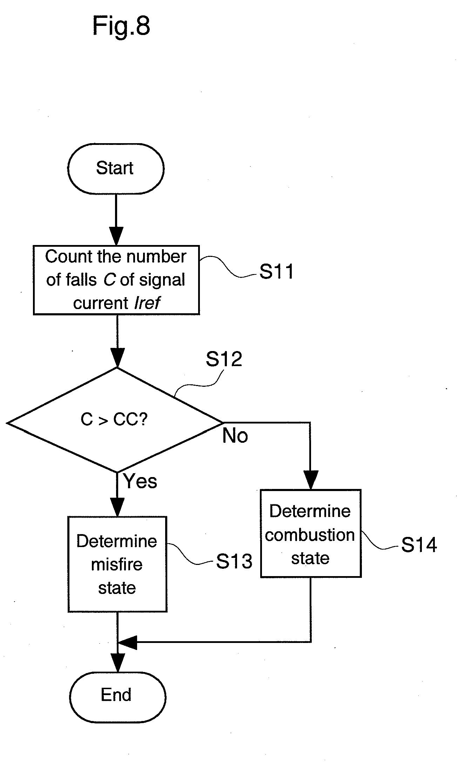

In such a mode, as the combustion state determination program, the following processes should be carried out instead of processes of steps S1 to S4 in the embodiment described above. The schematic procedure of the processes will be described, referring to the flowchart of Fig. 8.

First, in step S11, the number of falls *C* of the signal current *Iout* is counted. Specifically, the number of times that the ion current *Iion* becomes greater than the prescribed threshold value *Iref,* i.e., the number of interrupt, is counted. Then, the process proceeds to step S12.

In step S12, whether or not the number of falls *C* of the signal current *Iout* is greater than a prescribed value *CC* is determined. When the number of falls *C* of the signal current *Iout* is greater than the prescribed value *CC,* the process proceeds to step S13. Otherwise, the process proceeds to step S14.

In step S13, it is determined that the engine 100 is in themisfire state, and the combustion state determinationprogram ends.

In step S14, it is determined that the engine 100 is in the combustion state, and the combustion state determination program ends.

In this mode also, in the event of misfire, the LC resonance current is mainly detected. The LC resonance current oscillates at a substantially constant frequency. Between peaks, the detected ion current *Iion* becomes smaller than the prescribed threshold value *Iref* and approaches 0, and when the next peak becomes near, the ion current *Iion* becomes greater than the prescribed threshold value *Iref* again. Accordingly, in accordance with the peaks of the ion current *Iion,* falls and rises of the signal current *Iout* appear more frequently. On the other hand, in the combustion, because the LC resonance current is superimposed on the ion current associated with the combustion, a rise of the signal current *Iout* is not observed after start of the combustion until the measurement end point T3. Accordingly, the number of interrupt becomes fewer than that in the misfire state, which makes it possible to accurately detect the misfire state. Yet another possible mode may be, instead of counting the number of interrupt, to obtain Fourier transform of the waveform of the ion current *Iion* to extract frequency components. When a proportion of the components being equal to or greater than a prescribed threshold value to the extracted frequency components is equal to or greater than a prescribed permissible value, it is determined that the engine 100 is in the misfire state.

Yet another possible mode may be as follows. When the frequency components of the detected current substantially entirely fall within a prescribed range, that is, when the time interval between the peaks of the detected ion current *Iion* is substantially constant, it is determined that it is the misfire state. Specifically, when the proportion of the components falling within the prescribed range to the frequency components of the detected current is greater than a prescribed threshold value *LL,* it is determined that it is the misfire state.

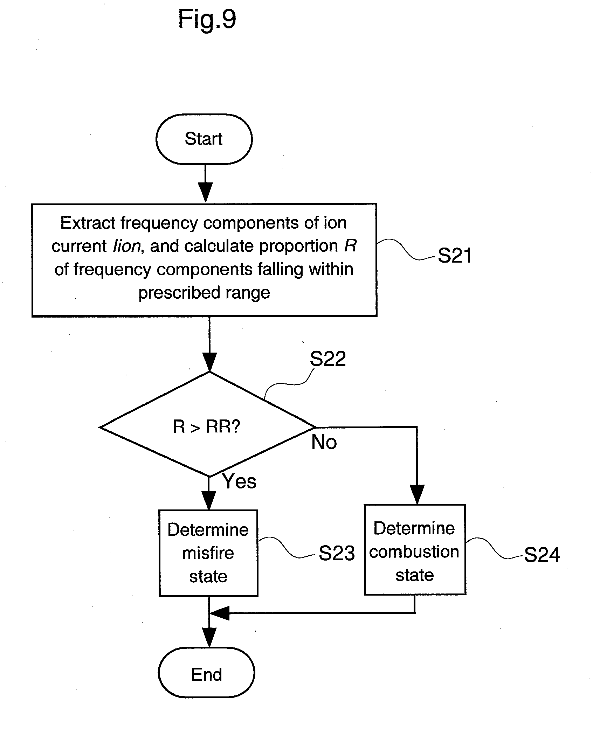

In such a mode, as the combustion state determination program, the following processes should be carried out instead of processes of steps S1 to S4 in the embodiment described above. The schematic procedure of the processes will be described, referring to the flowchart of Fig. 9.

First, in step S21, the frequency components of the detected ion current *Iion* is extracted, and a proportion R that is a proportion of frequency components falling within a prescribed range is calculated. This extraction of the frequency components is carried out, for example, by obtaining Fourier transform of the waveform of the ion current *Iion,* to thereby extract the frequency components. Then, the process proceeds to step S22.

In step S22, it is determined whether or not the proportion R of the frequency components that fall within a prescribed range to the extracted frequency components is greater than the prescribed value RR. When the proportion of the frequency components that fall within a prescribed range to the extracted frequency components is greater than the prescribed threshold value *LL,* the process proceeds to step S23. Otherwise, the process proceeds to step S24.

In step S23, it is determined that the engine 100 is in themisfire state, and the combustion state determination program ends.

In step S24, it is determined that the engine 100 is in the combustion state, and the combustion state determination program ends.

In such a mode, in the event of misfire, the LC resonance current having mainly a single type of frequency components is detected. Therefore, by determining that it is the misfire state when the proportion of the frequency components falling within a prescribed range is greater than the prescribed threshold value *LL,* the misfire state can accurately be detected. It is noted that the prescribed range of the frequency can previously be obtained empirically, as the frequency of an average LC resonance current in the misfire state. It is also possible to adopt the following mode: to measure the time interval of the falls of the signal current *Iout;* and when the variation rate of the time interval is equal to or smaller than a prescribed permissible value, treat the frequency components of the detected current to substantially entirely fall within a prescribed range, to determine it is the misfire state.

In addition, yet another possible mode may be to measure the peak value of the ion current *Iion* in an analog manner, and to determine that it is the misfire state when the peak value is attenuated. Those modes are also possible based on the following reason: in the event of misfire, the LC resonance current is mainly detected, and the LC resonance current often attenuates while oscillating in a prescribed cycle; whereas in the combustion state, the peak value of the detected current is often greater than the first peak value of the LC resonance current because the LC resonance current is superimposed on the ion current *Iion.* Further, it may also possible to detect the temporal differentiation of the ion current *Iion,* and to determine that it is in the misfire state when the peak value of the temporal differentiation is equal to or greater than a prescribed value. This is because the LC resonance current is mainly detected in the misfire state, in which LC resonance current oscillates at high frequencies, whereas a superimposition of the LC resonance current on the ion current is detected in the combustion state, and therefore the temporal variation is relatively gentle.

Yet another possible mode may be to determine it is the misfire state when an integral value *IIion* of the ion current *Iion* is smaller than a prescribed value *TI.*

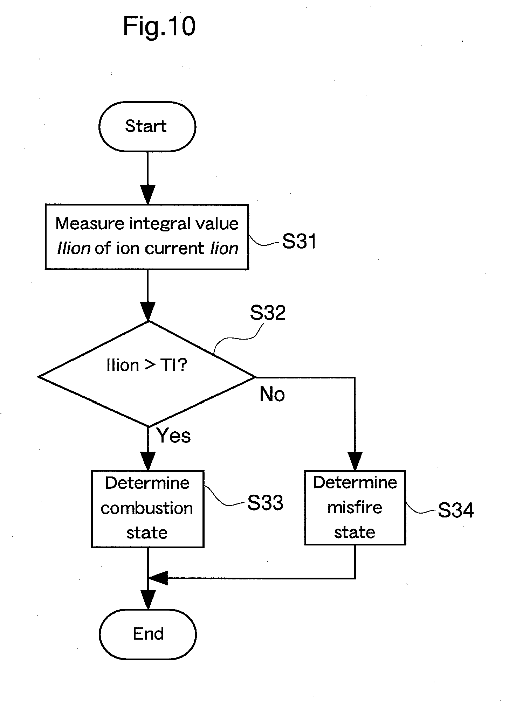

In such a mode, as the combustion state determination program, the following processes should be carried out instead of processes of steps S1 to S4 in the embodiment described above. The schematic procedure of the processes will be described, referring to the flowchart of Fig. 10. It is noted that, in this mode, the ion current *Iion* at each time point is measured in an analog manner. By storing the measured ion current *Iion* in association with the time point, a waveform is obtained. Based on the waveform, the integral value *IIion* of the ion current *Iion* is calculated.

First, in step S31, the integral value *IIion* of the ion current *Iion* from a fall of the ignition signal to the end of the discharge time zone is calculated. Then, the process proceeds to step S32.

In step S32, whether or not the integral value *IIion* of the ion current *Iion* is greater than the prescribed value *TI* is determined. When the integral value *IIion* is greater than the prescribed value *TI,* the process proceeds to step S33. Otherwise, the process proceeds to step S34.

In step S33, it is determined that the engine 100 is in the combustion state, and the combustion state determination program ends.

In step S34, it is determined that the engine 100 is in themisfirestate, and the combustion state determination program ends.

In such a structure, in the combustion, a superimposition of the LC resonance current on the ion current associated with combustion is detected as the ion current *Iion.* Therefore, during combustion after the end of ignition, the ion current *Iion* will not approach 0. In contrast, in the event of misfire, the LC resonance current is mainly detected, and the detected current oscillates in a prescribed cycle and, as illustrated in Figs. 5 to 7, the second and following peak intensities do not become greater than the first peak intensity. Accordingly, the integral value *IIion* of the ion current *Iion* becomes greater in the combustion state, and becomes smaller in the event of misfire.

Hence, in this mode also, it becomes possible to prevent the problem that arises in the conventional manner in which detection of the ion current *Iion* is carried out at a measurement start time point after a lapse of time required for the LC resonance current to fully attenuate from the end of ignition in the combustion, i.e., mistaken determination due to occurrence of noise leakage or corona noise and the like that there is no misfire when actually is. Additionally, because the ion current *Iion* after the end of discharge when combustion is attained until a lapse of time required for the LC resonance current to fully attenuate is detected, the ion current *Iion* associated with combustion can be detected even when the combustion ends early. Accordingly, it becomes also possible to prevent the problem of mistaken determination when the combustion progresses fast that it is the misfire state despite normal combustion being actually attained.

In addition to the foregoing, various modifications can be made in so far as not undermining the principle of the present invention.

INDUSTRIAL APPLICABILITY

Thus, with the method for determining the combustion state of an internal combustion engine according to the present invention, centering attention on the fact that the waveform forming of the detected current in the event of misfire differs from that in the combustion, e. g. , in the former case, the current having a waveform caused by the LC resonance between the secondary side of the ignition coil and the spark plug has a long duration time, the misfire determination is carried out based on the waveform forming. Therefore, it becomes possible to prevent the problem of mistaken determination due to occurrence of an elongated current caused by the LC resonance or corona noise that there is no misfire when actually is. Further, because the current immediately after the end of discharge is detected, the ion current can be detected even when the combustion ends early. Accordingly, it becomes also possible to prevent the problem of mistaken determination when the combustion progresses fast that it is the misfire state despite normal combustion being actually attained.

**Claims**

1. A method for determining a combustion state of an internal combustion engine having its spark plug connected to an ion current detection circuit, the method comprising:

detecting a current generated on a secondary side of an ignition coil caused by an LC resonance between the secondary side of the ignition coil and the spark plug at an end of discharge of the spark plug; and
determining a combustion state based on a shape of a waveform caused by the LC resonance of the detected current.

2. The method for determining a combustion state of an internal combustion engine according to claim 1, wherein a misfire state is determined when a duration time of the waveform caused by the LC resonance of the detected current is greater than a prescribed value.

3. The method for determining a combustion state of an internal combustion engine according to claim 1, wherein the detecting of the current generated on the secondary side of the ignition coil is carried out in a discharge time zone from a prescribed measurement start point to a prescribed measurement end point,
a time from an end of the duration time of the waveform caused by the LC resonance of the detected current to the measurement end point is measured as an elapsed time from end of resonance detection, and
a misfire state is determined when a ratio of the elapsed time from end of resonance detection to the duration time of the waveform caused by the LC resonance is smaller than a prescribed value.

4. The method for determining a combustion state of an internal combustion engine according to claim 2 or 3, wherein a waveform forming circuit that outputs a signal current when a current output from the ion current detection circuit is smaller than a prescribed current value is connected to the ion current detection circuit, and
a length of a period from a fall of the signal current detected first to a fall of the signal current detected last is measured as the duration time of the waveform caused by the LC resonance.

5. The method for determining a combustion state of an internal combustion engine according to claim 1, wherein a misfire state is determined when an integral value of the detected current is smaller than a prescribed value.

6. The method for determining a combustion state of an internal combustion engine according to claim 1, wherein when a frequency of the waveform caused by the LC resonance of the detected current is equal to or higher than a prescribed value, or a misfire state is determined when frequency components of the waveform caused by the LC resonance of the detected current substantially entirely fall within a prescribed range.

7. The method for determining a combustion state of an internal combustion engine according to claim 1, wherein a misfire state is determined when a peak value of the detected current is attenuated.

# Fig.1

# Fig.2

# Fig.3

```
        ┌─────────┐
        │  Start  │
        └─────────┘
             │
             ▼
   ┌────────────────────┐
   │    Measure LC      │
   │ resonance current  │  ─── S1
   │ duration time spksted │
   └────────────────────┘
             │
             ▼
          ╱─────╲                S2
        ╱         ╲
      ╱  spksted > Ts? ╲──── No ────┐
        ╲         ╱
          ╲─────╱
             │                      │
            Yes                     │
             ▼                      ▼
   ┌────────────┐          ┌────────────┐
   │ Determine  │          │ Determine  │
   │  misfire   │ ─ S3     │ combustion │ ─ S4
   │   state    │          │   state    │
   └────────────┘          └────────────┘
             │                      │
             ◄──────────────────────┘
             │
             ▼
        ┌─────────┐
        │   End   │
        └─────────┘
```

# Fig.4

Lapse of time

# Fig.5

Lapse of time

# Fig.6

# Fig.7

# Fig.8

```
        ┌─────────┐
        │  Start  │
        └────┬────┘
             │
             ▼
   ┌──────────────────┐
   │ Count the number │
   │ of falls C of    │───── S11
   │ signal current   │
   │ Iref             │
   └────────┬─────────┘
            │
            ▼
         ╱─────╲
       ╱         ╲          S12
     ╱   C > CC?   ╲──────────
       ╲         ╱   No
         ╲─────╱   │
          │ Yes    │
          ▼        ▼
   ┌──────────┐  ┌────────────┐
   │Determine │  │ Determine  │
   │ misfire  │  │ combustion │──── S14
   │  state   │  │   state    │
   └────┬─────┘  └─────┬──────┘
        │  S13         │
        │◄─────────────┘
        ▼
   ┌─────────┐
   │   End   │
   └─────────┘
```

# Fig.9

```
        ┌─────────┐
        │  Start  │
        └─────────┘
             │
             ▼
┌──────────────────────────────┐
│ Extract frequency components  │
│ of ion current Iion, and      │      S21
│ calculate proportion R        │
│ of frequency components       │
│ falling within                │
│ prescribed range              │
└──────────────────────────────┘
             │
             ▼                    S22
          ◇─────────◇
         ╱  R > RR?   ╲──────────── No ──────┐
          ╲──────────╱                       │
             │ Yes                           │
             ▼                               ▼
      ┌───────────┐                   ┌───────────┐
      │ Determine │                   │ Determine │
      │  misfire  │  S23              │ combustion│  S24
      │   state   │                   │   state   │
      └───────────┘                   └───────────┘
             │                               │
             ▼◄──────────────────────────────┘
        ┌─────────┐
        │   End   │
        └─────────┘
```

# Fig.10

Start

↓

Measure integral value
*Iion* of ion current *Iion* —S31

↓

S32

Iion > TI?

No →

Yes
↓

Determine
combustion —S33
state

Determine
misfire —S34
state

↓ ←

End

## INTERNATIONAL SEARCH REPORT

| | International application No. |
|---|---|
| | PCT/JP2009/050015 |

**A. CLASSIFICATION OF SUBJECT MATTER**
*F02P17/12(2006.01)i, F02D45/00(2006.01)i, G01M15/11(2006.01)i*

According to International Patent Classification (IPC) or to both national classification and IPC

**B. FIELDS SEARCHED**

Minimum documentation searched (classification system followed by classification symbols)
F02P17/12, F02D45/00, G01M15/11

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-315297 A  (Denso Corp.),<br>06 December, 2007 (06.12.07),<br>Par. Nos. [0028] to [0034]; Fig. 2<br>(Family: none) | 1-7 |
| A | JP 11-013616 A  (Denso Corp.),<br>19 January, 1999 (19.01.99),<br>Par. Nos. [0036], [0037]<br>(Family: none) | 1-7 |

☐ Further documents are listed in the continuation of Box C.  ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 30 March, 2009 (30.03.09) | 07 April, 2009 (07.04.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7286552 B